# EUROPÄISCHE PATENTSCHRIFT

(11) **EP 2 115 939 B1**
(45) Veröffentlichungstag und Bekanntmachung des Hinweises auf die Patenterteilung: **03.12.2014**
(21) Anmeldenummer: 08716234.3
(22) Anmeldetag: 04.03.2008
(51) Int. Cl.: H04L 12/24, H04L 12/26, H04W 24/00, H04W 84/18

(54) **Verfahren zur Analyse eines Ad-hoc-Netzwerks und elektronisches Gerät**
Method for the analysis of an ad-hoc network and electronic device
Procédé pour analyser un réseau ad hoc et appareil électronique approprié

(30) Priorität: 05.03.2007 DE 102007010545
(43) Veröffentlichungstag der Anmeldung: 11.11.2009
(73) Patentinhaber: Rohde & Schwarz GmbH & Co. KG, 81671 München (DE)
(72) Erfinder: STORN, Rainer, 85551 Kirchheim (DE)
(74) Vertreter: Beder, Jens
(86) Internationale Anmeldenummer: PCT/EP2008/001716
(87) Internationale Veröffentlichungsnummer: WO 2008/107161

(56) Entgegenhaltungen:
- WO-A-03/098447
- US-A- 5 768 552
- US-A1- 2004 077 354
- US-A1- 2006 126 514
- US-B1- 7 158 484

## Beschreibung

Die Erfindung betrifft ein Verfahren zur Analyse eines Ad-hoc-Netzwerks sowie ein entsprechendes elektronisches Gerät für ein solches Ad-hoc-Netzwerk.

Neben zellulären Funknetzen wie beispielsweise beim digitalen Mobilfunk sind zunehmend auch sog. Ad-hoc-Netzwerke verfügbar. Bei diesen Ad-hoc-Netzwerken dient jeder Teilnehmer gleichzeitig als Station zum Weiterleiten eines Datenstroms. Beim Zusammentreffen von mehreren Geräten, welche ein Ad-hoc-Netzwerk bilden, ist somit die erforderliche Information zwischen zwei Teilnehmern transportierbar, sofern über beliebige Zwischenstationen die Information letztlich zu dem Adressaten gelangen kann. Dabei sind weder feste Zwischenstationen erforderlich, noch müssen die miteinander kommunizierenden Geräte eine unmittelbare Verbindung zueinander aufbauen können. Der tatsächliche Übertragungsweg des Datenstroms kann somit für den Nutzer unbemerkt über verschiedene Zwischenstationen erfolgen. Allerdings ist die Gesamtheit der real verfügbaren Verbindungswege von entscheidender Bedeutung für die Performance des gesamten Ad-hoc-Netzes und somit auch für einen einzelnen Teilnehmer, der Informationen durch dieses Netzwerk transportieren möchte.

Insbesondere ist es zur Analyse eines Ad-hoc-Netzwerks von Interesse, welche möglichen Verbindungen das Ad-hoc-Netzwerk zu jedem Zeitpunkt zur Verfügung stellt. Dabei ist häufig nur ein Teil der teilnehmenden Geräte interessant, während die Verbindungsmöglichkeiten der übrigen Geräte untereinander keine Rolle spielen.

WO 03/098447 offenbart ein Verfahren zur Erzeügung einer hierarchisch aufgebauten Darstellung eines ad-hoc Netzwerkes. US 5768552 offenbart eine Darstellung in Kreisform.

Es ist daher die Aufgabe der Erfindung, ein Verfahren sowie ein entsprechendes elektronisches Gerät zu schafen, das die Übertragungswege in einem Ad-hoc-Netzwerk ermittelt.

Die Aufgabe wird durch das erfindungsgemäße Verfahren mit den Merkmalen des Anspruchs 1 und das erfindungsgemäße elektronische Gerät mit den Merkmalen des Anspruchs 7 gelöst.

Bei dem erfindungsgemäßen Verfahren zur Analyse eines Ad-hoc-Netzwerks, das elektronische Geräte zur drahtlosen oder leitungsgebundenen Kommunikation umfasst, wird zunächst aus einer Gesamtheit von elektronischen Geräten des Ad-hoc-Netzwerks eine Teilmenge von Geräten ausgewählt. Die Auswahl einer solchen Teilmenge kann beispielsweise berücksichtigen, dass ein individueller Teilnehmer lediglich an einer Kommunikation mit bestimmten anderen Teilnehmern des Ad-hoc-Netzwerks interessiert ist.

Für die ausgewählten Teilnehmer bzw. die ausgewählten elektronischen Geräte des Ad-hoc-Netzwerks wird für jede theoretisch mögliche Verbindung zu anderen ausgewählten Geräten der Teilmenge eine Messgröße ermittelt. Diese Meßgröße dient der Charakterisierung der Qualität einer Verbindung. Die ausgewählte Geräte der Teilmenge werden auf dem elektronischen Gerät dargestellt und diejenigen Verbindungen zwischen jeweils zwei Geräten, deren Messwert ein Vergleichs kriterium erfüllt, als realisierbare Verbindungen markiert.

Die Darstellung der ausgewählten elektronischen Geräte, also der Geräte der Teilmenge, wird so gewählt, dass für sämtliche möglichen Verbindungen zwischen den dargestellten. Teilnehmern eine klare Erkennbarkeit erreicht wird. Hierzu werden jeweils nur genau zwei Geräte auf einer gemeinsamen Geraden angeordnet. Anders als bei einer räumlich aufgelösten Darstellung, die die reale räumliche Anordnung der Teilnehmer des Ad-hoc-Netzwerks widerspiegelt, wird dadurch die Erkennbarkeit der realisierbaren Verbindungswege deutlich verbessert. Die Messgrößen werden für jede theoretisch mögliche Verbindung der Teilmenge erfasst werden. Das Erfassen der Messgrößen beinhaltet dabei sowohl das Messen von Verbindungen des eigenen elektronischen Geräts im Hinblick auf die theoretisch realisierbaren Verbindungen mit den weiteren elektronischen Geräten der Teilmenge von elektronischen Geräten des Ad-hoc-Netzwerks als auch das Auslesen von Messwerten für Verbindungen, die zwischen den anderen elektronischen Geräten ermittelt wurden. Damit steht dem bestimmten, eigenen elektronischen Gerät zu jeder zwischen den einzelnen Geräten der Teilmenge denkbaren Verbindung ein Messwert zur Verfügung, der über die Verbindungsqualität Aufschluss gibt. Dieser Messwert einer einzelnen möglichen Verbindung wird anschließend mit einem Vergleichskriterium verglichen. Das Vergleichskriterium kann im einfachsten Beispiel ein Schwellwert für ein Signal-Rauschverhältnis sein. Als realisierbare Verbindungen werden anschließend auf der Darstellungseinrichtung diejenigen Verbindungen zwischen den einzelnen elektronischen Geräten der Teilmenge dargestellt, welche das Vergleichskriterium erfüllen.

Das erfindungsgemäße elektronische Gerät zur Bildung eines Ad-hoc-Netzwerks mit weiteren elektronischen Geräten weist dazu einen Auswahlabschnitt zur Auswahl einer Teilmenge aus der Gesamtheit von Geräten auf. Ferner ist in dem elektronischen Gerät ein Ermittlungsabschnitt zur Ermittlung einer Messgröße für theoretisch mögliche Verbindungen zwischen den elektronischen Geräten vorgesehen. Ein Vergleichsabschnitt ist in dem elektronischen Gerät angeordnet, welcher zum Vergleichen der Messgrößen der Verbindungen der elektronischen Geräte der Teilmerige mit dem Vergleichskriterium dient. Ferner ist ein grafischer Ausgabeabschnitt vorgesehen, welcher die Koordinaten zur Darstellung der ausgewählten elektronischen Geräte auf einer Darstellungseinrichtung ermittelt. Durch den Ausgabeabschnitt werden ebenfalls diejenigen elektronischen Geräte ermittelt, welche das Vergleichskriterium erfüllen. Die Darstellungseinrichtung wird durch den Ausgabeabschnitt angesteuert.

Zusätzlich zu den theoretisch möglichen Verbindungen der Geräte der Teilmenge untereinander werden auch für die theoretisch möglichen Verbindungen zwischen den Geräten der Teilmenge und den übrigen Geräten der Gesamtheit die Messgröße ermittelt und mit dem Vergleichskriterium verglichen. Erfüllt eine solche Verbindung das Vergleichskriterium, so wird das noch nicht ausgewählte übrige Gerät der Gesamtheit automatisch durch den Auswahlabschnitt ausgewählt und damit der Teilmenge hinzugefügt. Ein solches neu ausgewähltes Gerät wird automatisch der Darstellung auf der Darstellungseinrichtung hinzugefügt. Dabei ist es insbesondere bevorzugt, wenn ein einmal hinzugefügter neuer Teilnehmer bzw. sein elektronisches Gerät in der Darstellung verbleibt, auch dann, wenn sämtliche seiner Verbindungen zu anderen elektronischen Geräten bzw. Teilnehmern das Vergleichskriterium nicht mehr verfüllen.

Die Anordnung der elektronischen Geräte auf der Darstellungseinrichtung ist kreisförmig und äquidistant, so dass die dargestellten realisierbaren Verbindungen möglichst übersichtlich angeordnet sind. Zudem wird beim nachträglichen, automatischen Hinzufügen eines Geräts durch Erfüllen des Vergleichskriteriums der Abstand der einzelnen Geräte automatisch in der Darstellung korrigiert. Die Übersichtlichkeit bleibt somit auch beim nachträglicher Hinzufügen durch Auswahl neuer elektronischer Geräte erhalten.

In den Unteransprüchen sind vorteilhafte Weiterbildungen des erfindungsgemäßen Verfahrens sowie des erfindungsgemäßen elektronischen Steuergeräts dargestellt.

Insbesondere ist es bevorzugt, wenn ein bestimmtes ausgewähltes Gerät, vorzugsweise jeweils das des analysierenden Teilnehmers, immer an dem selben Punkt der Darstellung angezeigt wird. Damit wird in einfacher Weise das jeweils eigene Gerät hervorgehoben dargestellt, so dass die Verbindungen zu diesem Gerät'leicht durch einen Nutzer erfasst werden können.

Zur Darstellung der Reihenfolge, in der die elektronischen Geräte auf dem Kreis angeordnet sind, wird vorzugsweise a priori für die Geräte der Gesamtheit der möglichen Geräte in dem Ad-hoc-Netzwerk eine Reihenfolge festgelegt. Die Geräte werden dann vorzugsweise ausgehend von dem bestimmten Gerät in dieser Reihenfolge auf dem Kreis angeordnet.

Insbesondere ist es vorteilhaft, die Messgrößen zyklisch zu erfassen und das Erfüllen des Vergleichskriteriums ebenfalls zyklisch zu überprüfen. Die Darstellung wird dann zyklisch aktualisiert, so dass ein Nutzer eines elektronischen Geräts zu jedem Zeitpunkt einen exakten Überblick über die realisierbaren Verbindungswege ausgehend von seinem eigenen elektronischen Gerät erhält.

Gemäß einer weiteren bevorzugten Ausführungsform werden die für die einzelnen Verbindungen erfassten Messwerte zusätzlich in der Darstellung angezeigt. Damit wird nicht nur angegeben, bei welchen Verbindungen eine Minimalanforderung zur Realisierung eines Datentransports erfüllt ist, sondern es wird auch möglich, die Qualität der einzelnen Verbindungen relativ untereinander zu bewerten.

In der Zeichnung ist das erfindungsgemäße Verfahren sowie die erfindungsgemäße Vorrichtung vereinfacht dargestellt. Ein bevorzugtes Ausführungsbeispiel wird in der nachfolgenden Beschreibung näher erläutert. Es zeigen:
- Fig. 1: eine einfache schematische Darstellung zur Erläuterung eines drahtlosen Ad-hoc-Netzwerks;
- Fig. 2: eine Darstellung eines Verfahrensablaufs zur Analyse der möglichen Verbindungen;
- Fig. 3: eine beispielhafte Darstellung einer grafischen Ausgabe; und
- Fig. 4: ein Blockschaltbild eines erfindungsgemäßen elektronischen Geräts.

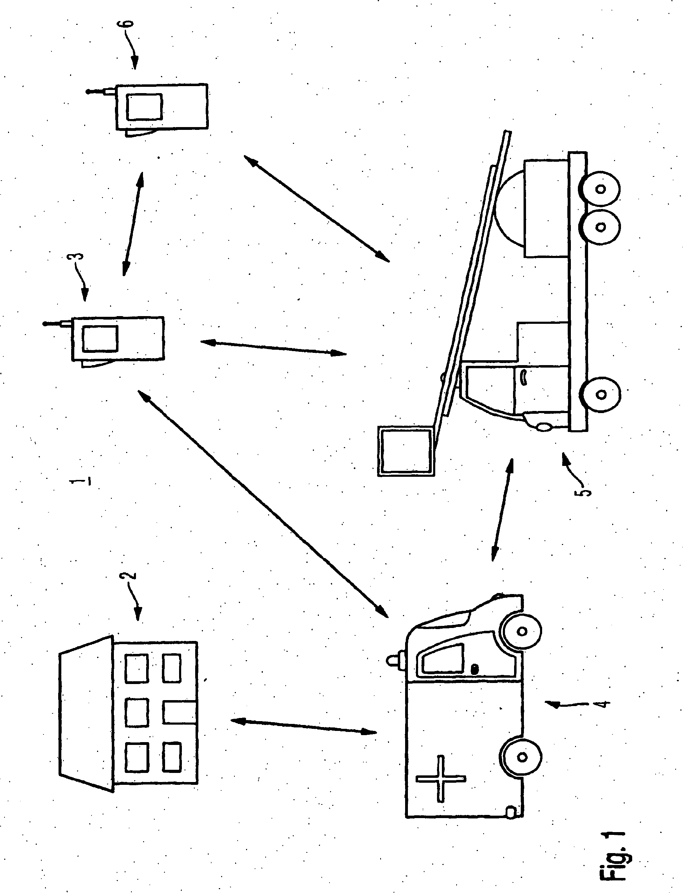

In der Fig. 1 ist ein einfaches drahtloses Ad-hoc-Netzwerk dargestellt, wie es beispielsweise im Verbund von Rettungsdiensten eingesetzt werden kann. Das Ad-hoc-Netzwerk 1 besteht aus insgesamt 5 Teilnehmern. So kann beispielsweise neben einer Einsatzzentrale, welche einen festen Standort 2 hat, ein erstes Einsatzfahrzeug 4 und ein zweites Einsatzfahrzeug 5 mit einem entsprechenden Funkgerät als elektronischem Gerät ausgerüstet sein. Diese Funkgeräte kommunizieren miteinander sowie mit der Einsatzzentrale 2 drahtlos. Ferner sind zwei weitere Teilnehmer 3, 6 bzw. deren elektronische Geräte vorgesehen. Die Teilnehmer 3, 6 sind in dem dargestellten Ausführungsbeispiel schematisch als Handsprechfunkgeräte ausgebildet. Sämtliche der beteiligten Geräte sind so eingerichtet, dass sie nicht nur direkt zu benachbarten oder erreichbaren weiteren Teilnehmern bzw. deren elektronischen Geräten eine Datenübertragung ermöglichen, sondern sie dienen gleichzeitig auch als Relaisstationen. Damit kann beispielsweise auch von den beiden Handfunkgeräten der Teilnehmer 3 und 6 eine Information zu der Einsatzzentrale 2 übermittelt werden, obwohl eine direkte Funkverbindung nicht besteht. Die Daten werden über das Funkgerät des ersten Einsatzfahrzeugs 4 zu der Einsatzzentrale 2 übermittelt, oder über das weitere Einsatzfahrzeug 5, sowie über das erste Einsatzfahrzeug 4 zu der Einsatzzentrale 2 weitergeleitet. Die Verbindungen der einzelnen elektronischen Geräte in dem Netzwerk werden dynamisch auf- und abgebaut. Ein Ausfall oder eine Positionsänderung führen somit zu einer automatischen Anpassung der Übertragungswege.

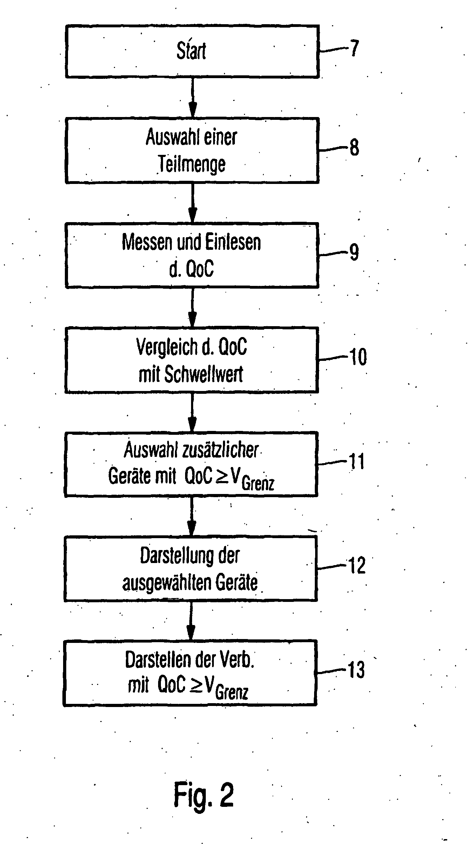

Das Verfahren zur Analyse der möglichen Obertragungswege ist stark vereinfacht in Fig. 2 dargestellt. Beim Start in Schritt 7 eines elektronischen Geräts, z.B. des Handfunkgeräts 3, wird zunächst eine Auswahl aus der Gesamtheit der elektronischen Geräte getroffen (Schritt 8). Die Gesamtheit der elektronischen Geräte, die in dem Ad-hoc-Netzwerk miteinander kommunizieren können, kann dabei beispielsweise durch den Verbund von Rettungsfahrzeugen und Helfern der Fig. 1 definiert sein. Aus dieser Gesamtheit von Geräten wird eine Teilmenge von Geräten ausgewählt. Die Auswahl der Teilmenge kann dabei individuell für jedes elektronische Gerät durch eine Benutzereingabe erfolgen. Für sämtliche theoretisch möglichen Verbindungen zwischen den elektronischen Geräten, die in der Teilmenge ausgewählt sind, wird dann ein Messwert ermittelt. Das bestimmte elektronische Gerät, auf dem das Verfahren durchgeführt wird, kann Messwerte für direkte, eigene Verbindungen durch eine in dem elektronischen Gerät vorhandene Messeinrichtung selbst ermitteln. Dabei wird beispielsweise für jede mögliche Verbindung des bestimmten Geräts zu den anderen ausgewählten Geräten der Teilmenge ein Qualitätsmerkmal QoC ermittelt. Ein solches Qualitätsmerkmal QoC kann beispielsweise ein Signal-Rauschverhältnis sein. Zusätzlich zu den durch die Messeinrichtung unmittelbar gemessenen Messwerten werden auch diejenigen Messwerte der Verbindungen der übrigen elektronischen Geräte der Teilmenge untereinander in Schritt 9 ermittelt. Hierzu wird der in einer Verbindung zu einem anderen elektronischen Gerät gemessene Messwert über das Ad-hoc-Netzwerk zu dem bestimmten Gerät übermittelt, welches das Verfahren gerade ausführt. Da hierdurch nur Informationen übermittelt werden, die zu dem bestimmten Gerät übertragen werden können, beschränkt sich die Analyse auf diejenigen Verbindungen, die zu dem bestimmten Gerät führen.

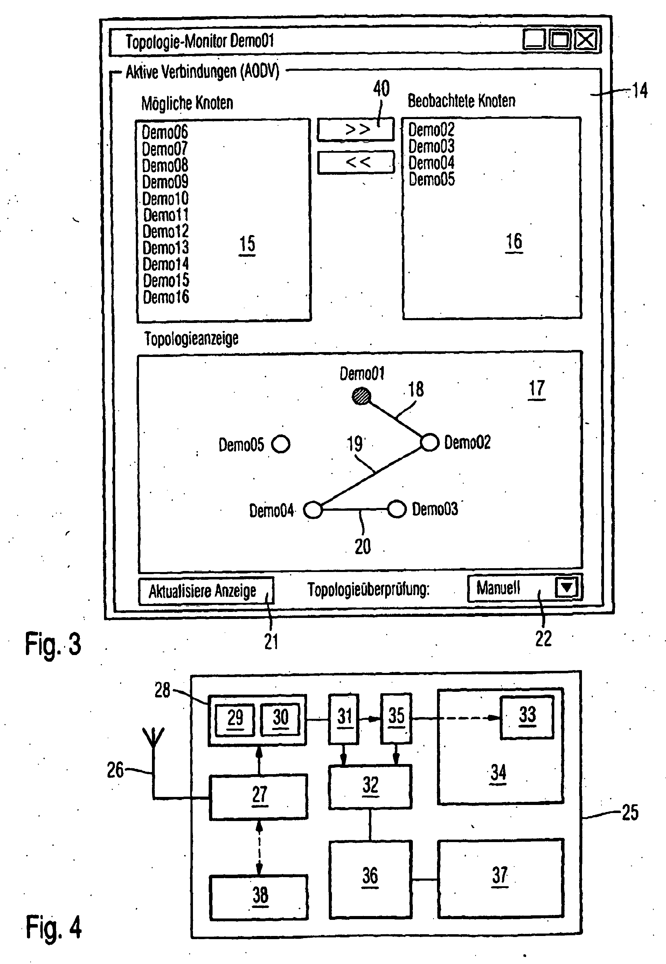

Die ermittelten Messwerte werden dann in Schritt 10 mit einem Vergleichskriterium verglichen. Das Vergleichskriterium kann im einfachsten Fall beispielsweise ein unterer Grenzwert v_{Grenz} für ein Signal-Rauschverhältnis sein. Wird der Grenzwert v_{crenz} überschritten oder zumindest durch den ermittelten Messwert für eine bestimmte Verbindung erreicht, so gilt diese Verbindung als eine tatsächlich realisierbare Verbindung. Eine realisierbare Verbindung ermöglicht einen ausfallsicheren Datentransfer. Zusätzlich zu den möglichen Verbindungen der Geräte der Teilmenge untereinander werden auch die möglichen Verbindungen der ausgewählten Geräte zu den übrigen elektronischen Geräten der Gesamtheit überprüft. Zunächst werden hierzu die Messwerte für Verbindungen zwischen den Geräten der Teilmenge und den übrigen Geräten der Gesamtheit ermittelt. Diese Messwerte werden über das bereits aufgebaute Ad-hoc-Netzwerk dem eigenen, bestimmten elektronischen Gerät zugeführt. Ergibt dort die Überprüfung im Hinblick auf das Erfüllen des Vergleichskriteriums, dass eine Verbindung eines ausgewählten Geräts zu einem der übrigen elektronischen Geräte realisierbar ist, also das Vergleichskriterium erfüllt ist, so wird automatisch das betreffende weitere elektronische Gerät ausgewählt und der Teilmenge hinzugefügt (Schritt 11). Die so letztlich die Teilmenge bildenden ausgewählten Geräte werden auf einer Darstellungseinrichtung des spezifischen elektronischen Geräts in Form z.B. einfacher Piktogramme oder anderer Identifikationen dargestellt (Schritt 12). Die elektronischen Geräte werden inklusive dem bestimmten elektronischen Gerät vorzugsweise auf einem Kreis angeordnet. Eine solche Darstellung wird nachfolgend unter Bezugnahme auf Fig. 3 noch erläutert.

In der Kreisdarstellung der ausgewählten Geräte der Teilmenge wird dann für jede realisierbare Verbindung eine Markierung dargestellt. Mit Hilfe dieser Markierungen ist es einfach möglich, Übertragungswege zwischen dem bestimmten elektronischen Gerät und sämtlichen erreichbaren anderen elektronischen Geräten nachzuvollziehen. Dabei wird es weiterhin bevorzugt, wenn zusätzlich zu der möglichen Verbindung auch der jeweilige Messwert der realisierbaren Verbindung mit angegeben wird. Dies erlaubt es, nicht nur die tatsächlich mögliche Übertragung von Daten oder Sprachsignalen zu dem Gerät zu erkennen, sondern es gibt auch einen Hinweis auf die Belastbarkeit des Netzes, welche von der Qualität der individuellen Verbindungen in dem Ad-hoc-Netzwerk abhängt.

Die Fig. 3 zeigt exemplarisch eine grafische Ausgabe der Analyse des Netzes auf einer Darstellungseinrichtung. Auf der Darstellungseinrichtung des bestimmten elektronischen Geräts wird ein Fenster 14 dargestellt. In dem Fenster 14 ist ein erster Bereich 15, ein zweiter Bereich 16 sowie ein dritter Bereich 17 angeordnet. Beim Start des Verfahrens in Schritt 7 werden zunächst alle möglichen Knoten, also elektronische Geräte der Gesamtheit, die über das Ad-hoc-Netzwerk miteinander verbunden werden können, in dem ersten Bereich 15 in Form einer Liste dargestellt. Aus dieser Liste kann eine beliebige Auswahl mittels einer Auswahlschaltfläche 40 getroffen werden. Auf Basis einer beliebigen Auswahl über die Auswahlschaltfläche 40, die beispielsweise mit Hilfe von einem Touch-Screen auf dem Gerät durchgeführt werden kann, werden die ausgewählten elektronischen Geräte in den zweiten Bereich 16 übernommen.'Die in den zweiten Bereich 16 übernommenen elektronischen Geräte werden in der Liste des ersten Bereichs 15 nicht mehr angeführt. Die ausgewählten elektronischen Geräte, die die in dem zweiten Bereich 16 dargestellte Teilmenge bilden, werden entlang einer Kreislinie in dem dritten Bereich 17 angeordnet gezeigt. Alternativ kann auch auf Basis einer Vorauswahl automatisch die Teilmenge gebildet werden.

Die Anordnung entlang einer Kreislinie stellt sicher, dass beliebige Verbindungen der einzelnen Geräte, die in dem Bereich 17 angeordnet sind, nicht zu einer Überdeckung oder zu einer Verschlechterung der Erkennbarkeit möglicher Verbindungen führt. Bei der Anordnung der Geräte entlang einer Kreislinie sind immer nur zwei Geräte auf einer Geraden angeordnet. In dem Bereich 17 ist es dargestellt, dass das eigene, bestimmte elektronische Gerät, auf dem die Analyse durchgeführt wird, am obersten Punkt des Kreises als festgelegter Fixpunkt angeordnet ist. Es bestehen in dem gezeigten Beispiel insgesamt drei realisierbare Verbindungen. Die realisierbaren Verbindungen bestehen zwischen dem ersten, eigenen elektronischen Gerät "Demo 01" und dem benachbart auf dem Kreis angeordneten ausgewählten elektronischen Gerät "Demo 02". Ferner ist eine realisierbare Verbindung für das ausgewählte elektronische Gerät "Demo 02" mit dem elektronischen Gerät "Demo 04" ermittelt worden. Die realisierbaren Verbindungen werden in bereits beschriebener Weise durch Überprüfen eines Messwerts im Hinblick auf ein Vergleichskriterium ermittelt.

Hierzu werden zunächst die Messwerte sämtlicher theoretisch möglicher Verbindungen der ausgewählten elektronischen Geräte untereinander ermittelt. In dem dargestellten Ausführungsbeispiel ergab die Überprüfung des Messwerts im Hinblick auf das Erfüllen eines Vergleichskriteriums, dass sowohl zwischen dem elektronischen Gerät "Demo 02" und dem weiteren elektronischen Gerät "Demo 04" eine realisierbare Verbindung existiert, wie auch zwischen dem weiteren elektronischen Gerät "Demo 04" und dem weiteren elektronischen Gerät "Demo 03". Somit ist in der Darstellung eine Verbindungslinie 18 zwischen dem eigenen elektronischen Gerät "Demo 01" und dem weiteren Gerät "Demo 02" als Markierung einer realisierbaren Verbindung eingezeichnet. Ferner ist eine weitere Verbindungslinie 19 zur Markierung eines realisierbaren weiteren Übertragungswegs zwischen dem weiteren Gerät "Demo 02" und dem weiteren Gerät "Demo 04" eingezeichnet. Zwischen dem weiteren Gerät "Demo 04" und dem noch weiteren Gerät "Demo 03" ist eine dritte Verbindungslinie 20 angezeigt. Die Anfangs- und Endpunkte der Summe der Verbindungslinien 18, 19 und 20 gibt einen maximal möglichen Übertragungsweg von dem eigenen elektronischen Gerät zu einem Endpunkt hier im Gerät "Demo 03" an. Dabei können alle auf dieser Linie beteiligten Geräte angesprochen werden. Die Aktualisierung der Messwerte bzw. die Aktualisierung der Darstellung der realisierbaren Verbindungen kann entweder zyklisch erfolgen oder aber durch manuellen Eingriff. Hierzu ist eine Schaltfläche 21 vorgesehen. Ferner kann eine Topologieüberprüfung entweder manuell oder automatisch durchgeführt werden. Die Auswahl erfolgt über ein Scroll-Down-Menü. Zum Entfernen eines ausgewählten Geräts der Teilmenge wird dieses in der Liste des zweiten Bereichs 16 markiert und anschließend durch Betätigung einer Entfernen-Schaltfläche 41 wieder der Liste der übrigen elektronischen Geräte im ersten Bereich 15 zugeführt.

Ein Blockschaltbild eines erfindungsgemäßen elektronisches Geräts ist in Fig. 4 dargestellt. Das elektronische Gerät ist beispielsweise ein Handfunkgerät, wie es für die Teilnehmer 3 und 6 in der Fig. 1 dargestellt ist. Das elektronische Gerät 25 kommuniziert mit den anderen elektronischen Geräten des Ad-hoc-Netzwerks z.B. über eine Funkverbindung. Hierzu ist eine Antenne 26 an dem elektronischen Gerät 25 angeordnet. Die Antenne 26 ist mit einer Senden/Empfangseinrichtung 27 verbunden. Mit der Sende-/Empfangseinrichtung 27 ist ein Ermittlungsabschnitt 28 verbunden. Der Ermittlungsabschnitt 28 dient der Ermittlung sämtlicher Messwerte für die theoretisch denkbaren Verbindungen zwischen den ausgewählten Geräten und auch der ausgewählten Geräte zu den übrigen Geräten. Der Ermittlungsabschnitt 28 umfasst eine Messeinrichtung 29 sowie eine Erfassungseinrichtung 30. Mit Hilfe der Messeinrichtung 29 kann unmittelbar für die Verbindungen zu denjenigen Geräten, die direkt mit dem elektronischen Gerät 25 kommunizieren können, die Qualität der Verbindung bzw. ein entsprechender Messwert ermittelt werden. Beispielsweise wird eine Bitfehlerrate oder ein Signal-Rauschverhältnis für sämtliche theoretisch denkbaren Verbindungen des elektronischen Geräts 25 ermittelt. Bei den in dem dritten Bereich 17 in der Fig. 3 dargestellten Geräten der Teilmenge wären dies die Verbindungen des elektronischen Geräts "Demo 01" zu den elektronischen Geräten "Demo 02", "Demo 03", "Demo 04" und "Demo 05" und zu den übrigen Geräten "Demo 06" bis "Demo 16" der Gesamtheit. Die Messeinrichtung 29 ermittelt dabei lediglich die Messwerte für die direkten Verbindungen zwischen dem eigenen, bestimmten elektronischen Gerät und den anderen ausgewählten Geräten.

Mit der Erfassungseinrichtung 30 werden dagegen die Messwerte der übrigen Verbindungen ermittelt. Dabei werden durch die Erfassungseinrichtung 30 nicht nur die Messwerte für mögliche Verbindungen zwischen den weiteren ausgewählten Geräten "Demo 02, 03, 04, 05" erfasst, sondern auch mögliche Verbindungen zwischen den ausgewählten Geräten Demo 01 bis Demo 05 und den übrigen elektronischen Geräten Demo 06 bis Demo 17, die in dem ersten Bereich 15 aufgelistet sind.

Die gemessenen sowie erfassten Messwerte werden einem Vergleichsabschnitt 31 zugeführt. Die Auswahl von elektronischen Geräten erfolgt aus der Gesamtheit von elektronischen Geräten "Demo 01" bis "Demo 16", die in einem Bereich 33 eines Speichers 34 gespeichert sind. Hierzu greift ein Auswahlabschnitt 35 auf den Bereich 33 des Speichers 34 zu und wählt die entsprechenden elektronischen Geräte aus. Die Auswahl kann entweder nach bestimmten Auswahlkriterien erfolgen, die beispielsweise ein Nutzer einstellen kann, oder aber es kann ein Eingabemedium vorgesehen sein, über das aus der Gesamtheit der Geräte aktiv eine Auswahl durch einen Benutzer über die Auswahlschaltfläche 40 durchgeführt werden kann.

Zusätzlich werden durch den Auswahlabschnitt 35 automatisch diejenigen Geräte der Gesamtheit ausgewählt, für die durch den Vergleichsabschnitt 31 eine realisierbare Verbindung, also das Erfüllen eines Vergleichskriteriums, festgestellt wurde. Die ausgewählten Geräte werden ebenso wie die Ergebnisse der Überprüfung der Messwerte mit dem Vergleichskriterium einem Arbeitsspeicher 32 zugeführt. Der Arbeitsspeicher 32 ist mit einem Ausgabeabschnitt 36 verbunden. Der Ausgabeabschnitt 36 wiederum ist mit einer Darstellungseinrichtung 37 verbunden. Auf der Darstellungseinrichtung 37 wird in bereits erläuterter Weise, wie dies in der Fig. 3 dargestellt ist, die Teilmenge der ausgewählten Geräte "Demo 01" bis "Demo 05" auf einem Kreis dargestellt. Der Ausgabeabschnitt 36 legt dabei die Koordinaten der ausgewählten Geräte fest. Dabei liegt das eigene Gerät an einem vorgegebenen Fixpunkt innerhalb des Bereichs 17 fest. Bei der Anordnung der ausgewählten Geräte entlang der Kreislinie wird vorzugsweise eine für alle Geräte der Gesamtheit a priori vorgegebene Reihenfolge berücksichtigt. Die vorgegebene Reihenfolge ist in dem einfachen dargestellten Ausführungsbeispiel durch die Nummer der einzelnen elektronischen Geräte angegeben. Dabei bleibt insbesondere die Reihenfolge der angezeigten elektronischen.Geräte unverändert, auch dann, wenn ein neues Gerät hinzutritt. Dieses wird lediglich entsprechend seiner a priori festgelegten relativen Position in der Reihe der Geräte eingefügt.

Das Hinzutreten eines neuen Geräts kann beispielsweise bei zyklischer Überprüfung der Messwerte mit dem Vergleichskriterium auftreten. In diesem Fall wird beispielsweise auch zwischen zwei bereits dargestellten elektronischen Geräten auf der Kreislinie das weitere, durch Verbesserung der Verbindungsqualität aufzunehmende Gerät eingefügt.

Ferner ist es in der Fig. 4 dargestellt, dass das elektronische Gerät 25 eine Nutzanwendung enthalten kann. Eine solche Nutzanwendung ist beispielsweise ein Programm oder ein Algorithmus zum einfachen Übermitteln von Sprachdaten oder anderen zu übermittelnden Datenströmen. Die Nutzanwendung 38 ist ebenfalls mit dem Sende-/Empfangsmodul 37 verbunden.

Die Erfindung ist nicht auf das dargestellte Ausführungsbeispiel beschränkt. Vielmehr ist auch die Kombination einzelner Merkmale miteinander möglich. Die Erfindung kann vorteilhaft auch für kabelgebundene Ad-hoc-Netzwerke eingesetzt werden.

## Patentansprüche

1. Verfahren zur Analyse eines Netzwerks (1) umfassend eine Mehrzahl von elektronischen Geräten (3,6, 25) zur Kommunikation mit folgenden Verfahrensschritten:
- Auswählen einer Teilmenge von elektronischen Geräten aus einer Gesamtheit von elektronischen Geräten (3, 6, 25) nach einstellbaren Auswahlkriterien;
- Ermitteln und Erfassen einer Messgröße für jede theoretisch mögliche Verbindung, für die ein Messwert ermittelbar ist, zwischen den elektronischen Geräten der Teilmenge , die bis zu dem analysierenden Gerät (Demo 01) führt;
- Darstellen der Teilmenge von elektronischen Geräten;
- Überprüfen, ob die Messgröße ein Vergleichskriterium erfüllt;
- Darstellen und Markieren derjenigen Verbindungen (18, 19, 20) zwischen den elektronischen Geräten der Teilmenge, die das Vergleichskriterium erfüllen;
wobei
das Netzwerk ein Ad-hoc-Netzwerk (1) ist; und
das Auswählen einer Teilmenge von elektronischen Geräten individuell für jedes Gerät nach einstellbaren Auswahlkriterien erfolgt;
**dadurch gekennzeichnet,**
**dass** eine Anordnung zur Darstellung aller ausgewählten elektronischen Geräte der Teilmenge auf einem Kreis erfolgt und äquidistant ist und bei Hinzufügen eines Geräts die Abstände automatisch korrigiert werden; und
**dass** zusätzlich zu den theoretisch möglichen Verbindungen der Geräte der Teilmenge auch für die theoretisch möglichen Verbindungen der Geräte der Teilmenge zu den übrigen Geräten der Gesamtheit von Geräten die Messgröße ermittelt wird und bei Erfüllen des Vergleichskriteriums das diese Verbindung umfassende Gerät zusätzlich dargestellt und seine das Vergleichskriterium erfüllende Verbindung markiert wird.

2. Verfahren nach Anspruch 1,
**dadurch gekennzeichnet,**
**dass** ein bestimmtes, das Verfahren durchführende Gerät an einem festgelegten Fixpunkt des Kreises dargestellt wird.

3. Verfahren nach Anspruch 2,
**dadurch gekennzeichnet,**
**dass** für die Geräte der Gesamtheit eine Reihenfolge zur Darstellung festgelegt ist.

4. Verfahren nach einem der Ansprüche 1 bis 3,
**dadurch gekennzeichnet,**
**dass** die Überprüfung des Vergleichskriteriums zyklisch erfolgt und die Markierung der Verbindungen (18, 19, 20) automatisch aktualisiert wird.

5. Verfahren nach Anspruch 4,
**dadurch gekennzeichnet,**
**dass** ein dargestelltes Gerät auch dann in der Darstellung erhalten verbleibt, wenn keine Verbindung zwischen diesem Gerät und einem anderen Gerät der Teilmenge das Vergleichskriterium erfüllt.

6. Verfahren nach einem der Ansprüche 1 bis 5,
**dadurch gekennzeichnet,**
**dass** der das Vergleichskriterium erfüllende Messwert für jede der dargestellten Verbindungen (18, 19, 20) zugeordnet angezeigt wird.

7. Elektronisches Gerät zur Bildung eines Netzwerks (1) mit einer Mehrzahl von elektronischen Geräten einer Gesamtheit von elektronischen Geräten, mit einem Auswahlabschnitt (35) zur Auswahl einer Teilmenge von Geräten aus der Gesamtheit der Geräte nach einstellbaren Auswahlkriterien, einem Ermittlungsabschnitt (28) zur Ermittlung einer Messgröße für theoretisch mögliche Verbindungen zwischen den elektronischen Geräten, für die ein Messwert ermittelbar ist, einem Vergleichsabschnitt (31) zum Vergleichen der Messgrößen der Verbindungen der elektronischen Geräte der Teilmenge mit einem Vergleichskriterium, einem graphischen Ausgabeabschnitt (36) zur Festlegung von Koordinaten zur Darstellung der ausgewählten elektronischen Geräte auf einer Darstellungseinrichtung (37) und zur Darstellung und zur Markierung derjenigen Verbindungen (18, 19, 20) zwischen den elektronischen Geräten der Teilmenge, die das Vergleichskriterium erfüllen,
wobei,
das Netzwerk ein Ad-hoc-Netzwerk (1) ist; und
der Auswahlabschnitt (35) für die Auswahl einer Teilmenge von Geräten individuell für jedes elektronische Gerät nach einstellbaren Auswahlkriterien ausgelegt ist; **dadurch gekennzeichnet,**
**dass** alle ausgewählten Geräte der Teilmenge äquidistant auf einer Kreislinie angeordnet dargestellt werden; und
**dass** der Vergleichsabschnitt (31) mit dem Auswahlabschnitt (35) verbunden ist und dass der Auswahlabschnitt (35) so eingerichtet ist, dass diejenigen Geräte, deren Verbindung mit einem ausgewählten Gerät der Teilmenge das Vergleichskriterium erfüllt, durch den Auswahlabschnitt (35) automatisch aus der Gesamtheit der Geräte ausgewählt werden.

8. Elektronisches Gerät nach Anspruch 7,
**dadurch gekennzeichnet,**
**dass** durch den graphischen Ausgabeabschnitt (37) die Koordinaten in Abhängigkeit von einem fest vorgegebenen Fixpunkt zur Darstellung eines bestimmten Geräts (Demo 01) bestimmt werden.

9. Elektronisches Gerät nach einem der Ansprüche 7 bis 8,
**dadurch gekennzeichnet,**
**dass** durch den graphischen Ausgabeabschnitt (36) jedem ausgewählten Gerät eine Koordinate der Darstellungseinrichtung (37) zugeordnet wird, wobei bei der Zuordnung der Koordinaten für die Geräte eine vorbestimmte Reihenfolge für die Geräte der Gesamtheit berücksichtigt wird.

10. Digitales Speichermedium mit elektronisch auslesbaren Steuersignalen, die so mit einem programmierbaren Computer oder digitalen Signalprozessor zusammenwirken können, dass das Verfahren nach einem der Ansprüche 1 bis 6 ausgeführt wird.

11. Computerprogramm mit Programmcode-Mitteln, um alle Schritte gemäß einem der Ansprüche 1 bis 6 durchführen zu können, wenn das Programm auf einem Computer oder einem digitalen Signalprozessor ausgeführt wird.

12. Computerprogramm mit Programmcode-Mitteln, um alle Schritte gemäß einem der Ansprüche 1 bis 6 durchführen zu können, wenn das Programm auf einem maschinenlesbaren Datenträger gespeichert ist.

13. Computerprogramm-Produkt mit auf einem maschinenlesbaren Datenträger gespeicherten Programmcode-Mitteln, um alle Schritte gemäß einem der Ansprüche 1 bis 6 durchführen zu können, wenn das Programm auf einem Computer oder einem digitalen Signalprozessor ausgeführt wird.

## Claims

1. Method for the analysis of a network (1) comprising a plurality of electronic devices (3, 6, 25) for communication with the following method steps:
- selection of a subset of electronic devices from a totality of electronic devices (3, 6, 25) according to adjustable selection criteria;
- determination and acquisition of a measured value for each theoretically possible connection for which a measured value can be determined between the electronic devices of the subset that leads to the analysing device;
- display of the subset of electronic devices;
- examination of whether the measured value satisfies a comparison criterion;
- display and marking of those connections (18, 19, 20) between the electronic devices of the subset that satisfy the comparison criterion;
wherein the network is an ad-hoc network (1); and
the selection of a subset of electronic devices is performed individually for each device according to adjustable selection criteria, **characterized in that** an arrangement for the display of all the selected electronic devices of the subset is made on a circle and is equidistant, and that when a device is added the spacings are automatically corrected; and
that in addition to the theoretically possible connections of the devices of the subset, the measured value is also determined for the theoretically possible connections of the devices of the subset to the other devices of the totality of devices, and if the comparison criterion is satisfied the device comprising this connection is also displayed and that its connection, satisfying the comparison criterion, is marked.

2. Method according to Claim 1,
**characterized in that**
a particular device carrying out the method is displayed at a specified fixed point on the circle.

3. Method according to Claim 2,
**characterized in that**
a sequence for the display is specified for the devices of the totality.

4. Method according to one of Claims 1 to 3,
**characterized in that**
the examination of the comparison criterion is performed cyclically, and the marking of the connections (18, 19, 20) is updated automatically.

5. Method according to Claim 4,
**characterized in that**
a displayed device also remains on the display if no connection between this device and another device of the subset satisfies the comparison criterion.

6. Method according to one of Claims 1 to 5,
**characterized in that**
the measured value that satisfies the comparison criterion for each of the displayed connections (18, 19, 20) is displayed associated with said connections.

7. Electronic device for forming a network (1) with a plurality of electronic devices of a totality of electronic devices, with a selection segment (35) for selecting a subset of devices from the totality of devices according to adjustable selection criteria, a determination segment (28) for determining a measured value for theoretically possible connections between the electronic devices for which a measured value can be determined, a comparison segment (31) for comparing the measured values of the connections of the electronic devices of the subset with a comparison criterion, a graphical output segment (36) for specifying coordinates for the display of the selected electronic devices on a display apparatus (37) and for the display and for marking those connections (18, 19, 20) between the electronic devices of the subset which satisfy the comparison criterion,
wherein,
the network is an ad-hoc network (1); and
the selection segment (35) is designed for the selection of a subset of devices individually for each electronic device according to adjustable selection criteria; **characterized in that**
all the selected devices of the subset are displayed arranged equidistantly on a circular line; and
the comparison segment (31) is connected with the selection segment (35), and that the selection segment (35) is designed in such a way that those devices whose connection to a selected device of the subset satisfies the comparison criterion are automatically selected by the selection segment (35) from the totality of devices.

8. Electronic device according to Claim 7,
**characterized in that**
the coordinates are determined by the graphical output segment (37) in relation to a prespecified fixed point for the display of a particular device (Demo 01).

9. Electronic device according to one of Claims 7 to 8,
**characterized in that**
a coordinate of the display apparatus (37) is assigned by the graphical output segment (36) to every selected device, wherein a prespecified sequence for the devices of the totality is taken into account in the assignment of the coordinates for the devices.

10. Digital storage medium with electronically readable control signals that can operate together with a programmable computer or digital signal processor in such a way that the method according to one of Claims 1 to 6 is executed.

11. Computer program with program code means in order to be able to carry out all the steps according to one of Claims 1 to 6, when the program is executed on a computer or a digital signal processor.

12. Computer program with program code means in order to be able to carry out all the steps according to one of Claims 1 to 6 when the program is stored on a machine-readable data medium.

13. Computer program product with program code means stored on a machine-readable data medium in order to be able to carry out all the steps according to one of Claims 1 to 6 when the program is executed on a computer or a digital signal processor.

## Revendications

1. Procédé pour analyser un réseau (1) comportant une pluralité d'appareils électroniques (3, 6, 25) en vue d'une communication comportant les étapes de procédé suivantes :
- sélectionner un sous-ensemble d'appareils électroniques parmi un ensemble d'appareils électroniques (3, 6, 25) selon des critères de sélection variables ;
- détecter et déterminer une grandeur de mesure pour chaque liaison théoriquement possible, pour laquelle une valeur de mesure peut être détectée, entre les appareils électroniques du sous-ensemble, qui conduit à l'appareil à analyser ;
- afficher le sous-ensemble d'appareils électroniques ;
- vérifier, si la grandeur de mesure remplit un critère de comparaison ;
- afficher et repérer les liaisons (18, 19, 20) entre les appareils électroniques du sous-ensemble, qui remplissent le critère de comparaison ;
dans lequel le réseau est un réseau ad hoc (1) ; et
la sélection du sous-ensemble d'appareils électroniques s'effectue individuellement pour chaque appareil selon les critères de sélection variables ; **caractérisé en ce qu'**un agencement en vue de l'affichage de tous les appareils électroniques sélectionnés du sous-ensemble s'effectue sur un cercle et est équidistant et en cas d'ajout d'un appareil, les distances sont automatiquement corrigées ; et
**en ce que**, en plus des liaisons théoriquement possibles des appareils du sous-ensemble, la grandeur de mesure est détectée également pour les liaisons théoriquement possibles des appareils du sous-ensemble aux autres appareils de l'ensemble d'appareils et en cas de satisfaction du critère de comparaison, l'appareil comportant cette liaison est affiché en plus et sa liaison remplissant le critère de comparaison est marquée.

2. Procédé selon la revendication 1, **caractérisé en ce que**
un appareil déterminé effectuant le procédé est affiché en un point fixe déterminé du cercle.

3. Procédé selon la revendication 2, **caractérisé en ce que**
un ordre en vue de l'affichage est défini pour les appareils de l'ensemble.

4. Procédé selon l'une des revendications 1 à 3, **caractérisé en ce que**
la vérification du critère de comparaison est effectuée de façon cyclique et le marquage des liaisons (18, 19, 20) est actualisé automatiquement.

5. Procédé selon la revendication 4, **caractérisé en ce que**
un appareil affiché se trouve également conservé dans l'affichage, lorsqu'aucune liaison entre cet appareil et un autre appareil du sous-ensemble ne remplit le critère de comparaison.

6. Procédé selon l'une des revendications 1 à 5, **caractérisé en ce que**
la valeur de mesure remplissant les critères de comparaison est indiquée associée à chacune des liaisons affichées (18, 19, 20).

7. Appareil électronique pour former un réseau (1) comportant une pluralité d'appareils électroniques d'un ensemble d'appareils électroniques, comportant une section de sélection (35) pour sélectionner un sous-ensemble d'appareils parmi l'ensemble d'appareils selon des critères de sélection variables, une section de détection (28) pour détecter une grandeur de mesure pour les liaisons théoriquement possibles entre les appareils électroniques, pour lesquels une valeur de mesure peut être détectée, une section de comparaison (31) pour comparer les grandeurs de mesure des liaisons des appareils électroniques du sous-ensemble avec un critère de comparaison, une section de sortie graphique (36) pour déterminer les coordonnées en vue de l'affichage des appareils électroniques sélectionnés sur un dispositif d'affichage (37) et en vue de l'affichage et du marquage de ces liaisons (18, 19, 20) entre les appareils électroniques du sous-ensemble, qui remplissent le critère de comparaison,
dans lequel le réseau est un réseau ad hoc (1) ; et
la section de sélection (35) pour la sélection d'un sous-ensemble d'appareils est prévue individuellement pour chaque appareil électronique selon des critères de sélection variables ; **caractérisé en ce que**
tous les appareils sélectionnés du sous-ensemble sont affichés disposés équidistants sur une ligne circulaire; et
**en ce que** la section de comparaison (31) est reliée à la section de sélection (35) et **en ce que** la section de sélection (35) est agencée, de sorte que ces appareils, dont la liaison avec un appareil sélectionné du sous-ensemble remplit le critère de comparaison, sont sélectionnés automatiquement à partir de l'ensemble des appareils par la section de sélection (35).

8. Appareil électronique selon la revendication 7, **caractérisé en ce que**
les coordonnées sont déterminées selon un point fixe clairement déterminé en vue de l'affichage d'un appareil déterminé (Demo 01) par la section de sortie graphique (37).

9. Appareil électronique selon l'une des revendications 7 à 8, **caractérisé en ce que**
une coordonnée du dispositif d'affichage (37) est associée à chaque appareil sélectionné par la section de sortie graphique (36), dans lequel un ordre prédéterminé pour les appareils de l'ensemble est pris en compte lors de l'affectation des coordonnées aux appareils.

10. Support de mémoire numérique comportant des signaux de commande pouvant être lus électroniquement, qui peuvent agir conjointement avec un ordinateur programmable ou un processeur de signaux numériques, de sorte que le procédé selon l'une quelconque des revendications 1 à 6 est exécuté.

11. Programme informatique comportant des moyens de code de programme, pour pouvoir effectuer toutes les étapes selon l'une des revendications 1 à 6, lorsque le programme est exécuté sur un ordinateur ou un processeur de signal numérique.

12. Programme informatique comportant des moyens de code de programme, pour pouvoir effectuer toutes les étapes selon l'une quelconque des revendications 1 à 6, lorsque le programme est mémorisé sur un support de données pouvant être lu par une machine.

13. Produit de programme informatique comportant des moyens de code de programme mémorisé sur un support de données pouvant être lu par une machine, afin d'effectuer toutes les étapes selon l'une des revendications 1 à 6, lorsque le programme est exécuté sur un ordinateur ou sur un processeur de signal numérique.
